Europäisches Patentamt

European Patent Office

Office européen des brevets

(11) Veröffentlichungsnummer: **0 510 415 A1**

## EUROPÄISCHE PATENTANMELDUNG

(21) Anmeldenummer: **92105867.3**

(22) Anmeldetag: **04.04.92**

(51) Int. Cl.⁵: **G11B 33/00, G11B 23/28**

(30) Priorität: **20.04.91 DE 4112998**

(43) Veröffentlichungstag der Anmeldung:
**28.10.92 Patentblatt 92/44**

(84) Benannte Vertragsstaaten:
**AT BE CH DE DK ES FR GB IT LI LU NL SE**

(71) Anmelder: **SAVECOMP
EDV-SICHERUNGSSYSTEME GmbH
Stolzestrasse 59
W-3000 Hannover(DE)**

(72) Erfinder: **Schoor, Bodo
Angerstrasse 5
W-3404 Adelebsen(DE)**

(74) Vertreter: **Rehberg, Elmar, Dipl.-Ing.
Postfach 3162 Am Kirschberge 22
W-3400 Göttingen(DE)**

(54) Schutzvorrichtung für das Diskettenlaufwerk eines Computers.

(57) Eine Schutzvorrichtung für das Diskettenlaufwerk eines Computers weist einen im wesentlichen in das Diskettenlaufwerk einführbaren Grundkörper (2), einen aus dem Diskettenlaufwerk herausschauenden Schloßkörper (3) und eine Abdeckeinheit (10) für zumindest einen Teil des Einschiebeschlitzes des Diskettenlaufwerks auf. Als Grundkörper (2) ist eine Diskette vorgesehen oder der Grundkörper ist jedenfalls mit einer Diskette versehen. Die Abdeckeinheit (10) verhindert in der abgeschlossenen Stellung die Entnahme der Diskette.

Fig. 1

Die Erfindung bezieht sich auf eine Schutzvorrichtung für das Diskettenlaufwerk eines Computers, mit einem im wesentlichen in das Diskettenlaufwerk einführbaren Grundkörper, einem aus dem Diskettenlaufwerk herausschauenden Schloßkörper und einer Abdeckeinheit für zumindest einen Teil des Einschiebeschlitzes des Diskettenlaufwerks. Es handelt sich damit um eine in erster Linie mechanisch wirkende Schutzvorrichtung, die die unbefugte Benutzung des Diskettenlaufwerks verhindert, welches mit einem Computer oder einer Eingabestation üblicherweise verbunden ist.

Eine Schutzvorrichtung der eingangs beschriebenen Art ist aus dem DEGM 90 00 554.6 bekannt. Die dortige Schutzvorrichtung weist einen plattenförmigen Grundkörper auf, der im wesentlichen die Abmessungen einer in das Diskettenlaufwerk einsetzbaren Diskette hat, jedoch keine Diskette darstellt, sondern beispielsweise als Kunststoffspritzteil ausgebildet ist. Mit diesem plattenförmigen Grundkörper ist ein Schloßkörper verbunden, der in der in das Diskettenlaufwerk eingesetzten Stellung des Grundkörpers aus dem Diskettenlaufwerk herausschaut und die Betätigung mit einem Schlüssel gestattet. An der Schutzvorrichtung ist eine Abdeckeinheit vorgesehen, die den Auswurfriegel oder auch einen Teil des Einschiebeschlitzes des Diskettenlaufwerks abdeckt. Dies ist in der abgeschlossenen Stellung der Fall, in dem die Zugänglichkeit des Diskettenlaufwerks blockiert ist. Das Schloß kann mit dem Schloßkörper fest verbunden sein oder als Einsteckschloß zwischen Schloßkörper und Abdeckeinheit einführbar sein. Durch die relative Lage der Abdeckeinheit am Diskettenlaufwerk kann die angeführte und abgeschlossene Schutzvorrichtung nicht mehr entnommen werden, ohne daß zuvor das Schloß aufgeschlossen und die Abdeckeinheit weggeschwenkt oder in anderer Weise weggenommen wird. Damit ist es möglich, in einfacher Weise das Diskettenlaufwerk abzusichern, während der Computer und dessen Eingabeeinheit für den Benutzer frei zugänglich sind. Die volle Rechnerzugänglichkeit ermöglicht insoweit ein ungestörtes Arbeiten und stellt andererseits sicher, daß auf der Festplatte des Computers gespeicherte Daten und Programme nicht beabsichtigt oder unbeabsichtigt zerstört und auch nicht entnommen werden können. Nur, wenn der Speicherinhalt der Festplatte verändert werden soll, wird das Diskettenlaufwerk freigegeben und die erforderliche Eingabe durchgeführt. Andererseits ist dabei das Arbeiten mit dem Computer auf den Zugriff zu dessen Festspeicher beschränkt. Bei manchen Computeranwendungen ist es vorgesehen, daß der Computer nur dadurch gestartet werden kann, indem über eine Diskette zuvor Daten eingegeben werden. Wenn in Verbindung damit die bekannte Schutzvorrichtung eingesetzt wird, ist das Arbeiten damit vergleichsweise umständlich, weil die Schutzvorrichtung zunächst entfernt werden muß. Dann wird die Diskette eingeführt und der Computer gestartet. Anschließend muß die Diskette entfernt werden und die Schutzvorrichtung wieder eingesetzt und abgeschlossen werden.

Es sind weitere mechanische Schutzvorrichtungen bekannt, die mit einem Grundkörper und einem Schloßkörper ausgestattet sind. Auch hier besitzt der Grundkörper etwa die Abmessungen einer Diskette, ohne die Fähigkeiten einer Diskette zu haben. Das Schloß ist am Schloßkörper fest eingebaut und über ein Riegelwerk wird dafür Sorge getragen, daß eine Verhakung in abgeschlossener Stellung im Innern des Diskettenlaufwerks stattfindet, so daß die Schutzvorrichtung in dieser Stellung nicht entnommen werden kann. Auch hier ist es nicht möglich, bei eingesetzter Schutzvorrichtung Daten über das Diskettenlaufwerk einzugeben oder abzufragen.

Der Erfindung liegt die Aufgabe zugrunde, eine Schutzvorrichtung für ein Diskettenlaufwerk zu schaffen, die einerseits verhindert, daß Daten über das Diskettenlaufwerk unbefugt entnommen oder abgespeichert werden können, und die es andererseits ermöglicht, nicht nur mit den im Computer bzw. dessen Festspeicher vorhandenen Daten und Programmen zu arbeiten, sondern auch Daten über das Diskettenlaufwerk in der abgeschlossenen Stellung einzugeben, um beispielsweise den Computer im Netzverbund starten zu können.

Erfindungsgemäß wird dies dadurch erreicht, daß als Grundkörper eine Diskette vorgesehen ist oder der Grundkörper jedenfalls mit einer Diskette versehen ist, und daß die Abdeckeinheit in der abgeschlossenen Stellung die Entnahme der Diskette verhindert. Im Vergleich zum Stand der Technik ist damit der Grundkörper nicht mehr ein Totkörper, sondern eine Diskette, die somit auch die Eigenschaften einer Diskette erbringt, nämlich Daten zu speichern und ggf. auf- bzw. abnehmen zu können. Damit kann dann beispielsweise eine auf der Diskette vorhandene Kennung dazu genutzt werden, um den Computer zu starten. Weitere Möglichkeiten sind denkbar. Trotzdem wird bei einer eingesetzten Schutzvorrichtung in der abgeschlossenen Stellung verhindert, daß eine Fremddiskette eingeschoben wird, um Daten vom Computer oder dessen Festplatte unbefugt entnehmen zu können.

Bei der erfindungsgemäßen Ausbildung wird zunächst eine Funktion erreicht, wie sie auch die bekannte gattungsgemäße Sicherungsvorrichtung aufweist, d. h. es ist keine unbefugte Eingabe oder Entnahme von Daten über das Diskettenlaufwerk möglich. Darüberhinaus jedoch ermöglicht die neue Schutzvorrichtung auch ein kontrolliertes Ingangsetzen eines Rechners, wenn die dafür erforderlichen Befehle und Daten auf der Diskette gespeichert sind. Andererseits besteht die Möglichkeit, das Ingangsetzen des Computers komplett oder in Teilbereichen zu verhindern, z. B. durch Abfragen eines Kennworts oder im Zusammenhang mit Sicherheitssoftware, die auf der Diskette gespeichert ist. Schließlich ergibt sich als weiterer Vorteil, daß die einen Bestandteil der Schutzvorrichtung bildenden Diskette selbst gegen Diebstahl gesichert ist.

Der im wesentlichen als Diskette ausgebildete Grundkörper kann mit dem Schloßkörper und der Abdeckeinheit unlösbar verbunden sein. Dies kann durch eine Klebung, eine Schweißung o. dgl. erfolgen. In diesem Fall ist dann sichergestellt, daß die Schutzvorrichtung eine feste, unlösbare Einheit bildet und nur die mit dem Schloßkörper fest verbundene Diskette die erforderlichen Daten tragen kann bzw. zu tragen braucht.

Die Abdeckeinheit kann an dem Schloßkörper schwenkbar gelagert sein. Auch eine verschiebbare Lagerung ist möglich. In beiden Fällen kann die Abdeckeinheit eine Hindernisplatte aufweisen, die zumindest einen Teil des Einschiebeschlitzes des Diskettenlaufwerks abdeckt. Die Hindernisplatte ist in einer zur Diskette parallelen Ebene vorgesehen. Der Abstand der Ebenen entspricht dem Abstand des Einschiebeschlitzes von der Diskette in abgesenktem Zustand. Diese Ausführung ist für solche Diskettenlaufwerke gedacht, bei denen die Diskette nach dem Einführen in den Einschiebeschlitz um einen gewissen Betrag im Diskettenlaufwerk abgesenkt wird, so daß sich der Rand der Diskette zumindest teilweise hinter der Wandung, die den Einschiebeschlitz umgibt, verhakt. Durch das Bewegen der Abdeckeinheit mit der Hindernisplatte in ihre Schließlage wird das Anheben der Diskette, wie es bei einer normalen Entnahme der Diskette aus dem Laufwerk möglich ist, unterbunden, so daß die Diskette bzw. die Schutzvorrichtung auch dann nicht entnommen werden kann, wenn z. B. der Auswurfriegel des Diskettenlaufwerks zugänglich ist. Hier ergibt sich der Vorteil, daß die Schutzvorrichtung mit der Diskette auch außerhalb des Laufwerks abgeschlossen werden kann. In diesem Zustand ist die Diskette in ein Laufwerk eines Computers nicht einführbar, so daß die auf der Diskette befindlichen Daten nicht manipuliert werden können.

Der Schloßkörper kann einen Aufnahmeraum für den Einsatz eines Schlosses, insbesondere Steckschlosses, aufweisen. Es ist natürlich auch möglich, daß das Schloß in dem Schloßkörper ortsfest untergebracht ist, so daß nur der Schlüssel in der abgeschlossenen Stellung abziehbar ist.

Die Abdeckeinheit kann einen Teil zum Abdekken der Zugänglichkeit des Auswurfriegels des Diskettenlaufwerks aufweisen. Diese Ausführungsform ist dann sinnvoll, wenn beim Einführen der Diskette in das Diskettenlaufwerk kein Absenkvorgang stattfindet und auf diese Art und Weise der Auswurfriegel unzugänglich gemacht wird, wenn die Schutzvorrichtung abgeschlossen ist.

Die Abdeckeinheit und/oder der Schloßkörper kann den Einschiebeschlitz oder sonstige Teile des Diskettenlaufwerks hintergreifende Vorsprünge aufweisen, die über das Schloß betätigbar sind. Hier können haken- oder riegelartige Vorsprünge Verwendung finden, die entweder in Einschieberichtung des Diskettenlaufwerks oder quer dazu über das Schloß betätigbar sind. Auf diese Art und Weise werden Teile des Diskettenlaufwerks hintergriffen und die Entnahme der Schutzvorrichtung mit der Diskette blockiert.

Eine weitere Möglichkeit besteht darin, daß der im wesentlichen als Diskette ausgebildete Grundkörper mit dem Schloßkörper und der Abdeckeinheit lösbar verbunden ist oder ein davon getrenntes Teil darstellt. Damit ist es möglich, wahlweise verschiedene Disketten mit den übrigen Teilen der Schutzvorrichtung zu kombinieren und je nach Bedarf eine Schutzvorrichtung aus Schloßkörper und Abdeckeinheit einerseits sowie aus der Diskette andererseits zusammenzusetzen. Es versteht sich, daß bei eingeführter Diskette und abgeschlossenem Schloßkörper auch die Diskette vor Entnahme aus dem Diskettenlaufwerk geschützt ist.

Die Diskette kann über eine Steckhalterung auswechselbar am Schloßkörper angeordnet sein. Dabei muß die Ausbildung so getroffen sein, daß ggf. die Absenkbewegung der Diskette relativ zum Diskettenlaufwerk ermöglicht ist.

Der Schloßkörper kann - unabhängig davon, ob die Diskette mit dem Schloßkörper fest oder lösbar verbunden ist - als ein Rahmen mit einem zugehörigen Schieber, einer Tür oder eine Klappe ausgebildet sein. Dem Fachmann stehen hier verschiedene Ausführungsformen zur Verfügung, um den Schloßkörper und die Abdeckeinheit zu realisieren.

Die beiden Teile des Schloßkörpers bzw. der Abdeckeinheit sind in der abgeschlossenen Stellung aneinander fixiert und am Diskettenlaufwerk gesichert.

Die Erfindung wird anhand bevorzugter Ausführungsbeispiele weiter erläutert und beschrieben. Es zeigen:

Figur 1    eine Draufsicht auf eine erste Ausführungsform der Schutzvorrichtung in schematischer Darstellung,

Figur 2    eine Ansicht der Schutzvorrichtung gemäß Figur 1 in der eingesetzten Lage in ein Diskettenlaufwerk,

Figur 3    eine Draufsicht auf eine weitere Ausführungsform der Schutzvorrichtung und

Figur 4    die Ansicht der Schutzvorrichtung gemäß Figur 3, eingesetzt in ein Diskettenlaufwerk.

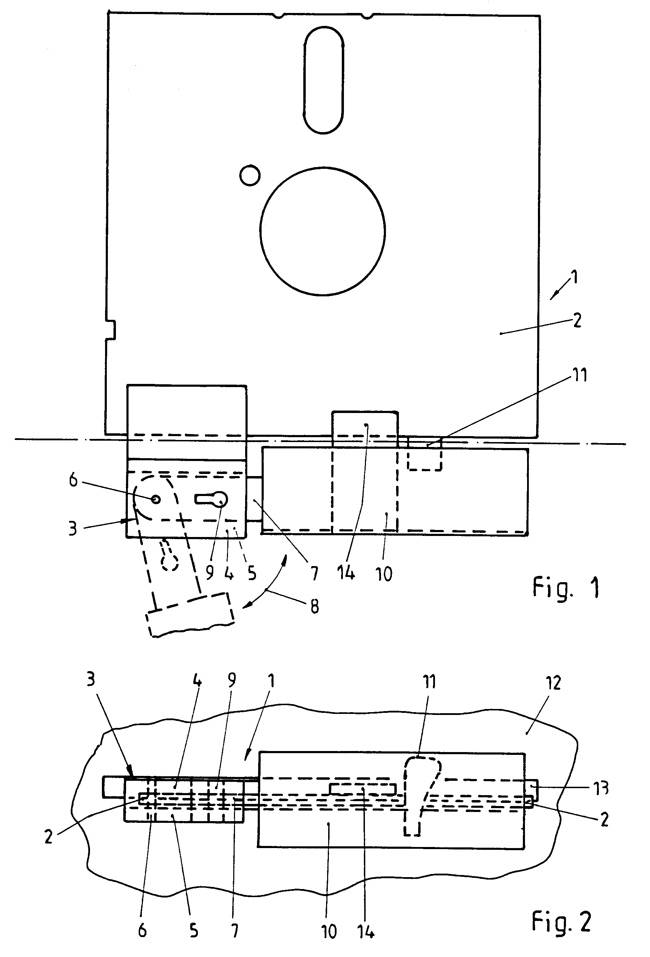

Die in Figur 1 dargestellte Schutzvorrichtung 1 weist einen plattenförmigen Grundkörper auf, der nicht nur die Umrisse und die Dicke einer Diskette besitzt, sondern aus einer Diskette besteht oder zumindest mit einer solchen versehen ist. Es handelt sich dabei um eine Diskette üblicher Ausbildung und mit den erwartungsgemäßen Eigenschaften. An dem Grundkörper 2 ist ein Schloßkörper 3 angeformt, beispielsweise durch Kleben oder Schweißen fest mit der Diskette verbunden. Der Schloßkörper 3 weist eine obere und eine untere Wange 4 und 5 auf, zwischen denen um einen Bolzen 6 mit vertikaler Achse ein Schwenkarm 7 in Richtung eines Doppelpfeils 8 schwenkbar gelagert ist. Sowohl die Wangen 4 und 5 wie auch der Schwenkarm 7 besitzen eine durchgehende fluchtende Durchbrechung 9, in welcher in der Blockierstellung ein Steckschloß eingeführt und durch Verdrehen des Schlüssels gesichert werden kann. Dies kann in der in Figur 1 dargestellten Blockierstellung geschehen. Mit gestrichelter Linienführung ist in Figur 1 die geöffnete, abgeschwenkte Stellung dargestellt. Mit dem Schwenkarm 7 ist eine Abdeckeinheit 10 fest verbunden, die eine haubenförmige Gestaltung aufweist und auch seitlich geschlossen ist, so daß die Abdeckeinheit 10 den Auswurfriegel 11 eines Diskettenlaufwerks 12 so abdeckt, daß der Auswurfriegel für eine Betätigung nicht zugänglich ist. In Figur 1 ist die Stirnseite des Diskettenlaufwerks 12 durch eine strichpunktierte Linie angedeutet. In Figur 2 ist auch der Einschiebeschlitz 13 des Diskettenlaufwerks 12 dargestellt. An der Abdeckeinheit 10 ist eine Hindernisplatte 14 angeformt, die in einer solchen Relativlage angeordnet ist, daß Sie erst nach dem Absenken des als Diskette ausgebildeten Grundkörpers 2 nach dem Einführen in den Einschiebeschlitz 13 zusammen mit der Abdeckeinheit 10 so verschwenken läßt, daß sie in den Einschiebeschlitz 13 hinein vorsteht, wie dies aus der Zusammenschau der Figuren 1 und 2 erkennbar ist.

Zur Absicherung eines Diskettenlaufwerks 12 gegen unbefugte Dateneinspeicherung oder Datenentnahme oder auch zum Ingangsetzen eines Computers wird die Schutzvorrichtung 1 mit ihrem als Diskette ausgebildeten Grundkörper 2 in den Einschiebeschlitz 13 des Diskettenlaufwerks 12 in gleicher Weise eingesetzt, wie dies auch beim üblichen Einschieben einer Diskette erfolgt. Dabei ist die Abdeckeinheit 10 in die Offenstellung abgeschwenkt, wie dies Figur 1 in gestrichelter Linienführung erkennen läßt. Nachdem der Grundkörper 2 in dem Diskettenlaufwerk 12 aufgenommen und abgesenkt ist, ist es möglich, die Abdeckeinheit 10 am Schwenkarm 7 so zu verschwenken, daß einerseits der Auswurfriegel 11 abgedeckt wird und andererseits die Hindernisplatte 14 teilweise in den Einschiebeschlitz 13 einragt. Es wird nun das Steckschloß in die miteinander fluchtenden Durchbrechungen 9 im Schloßkörper 3 eingesetzt und damit der Abschließvorgang beendet. Die auf der Diskette gespeicherten Daten können nun vom Diskettenlaufwerk übernommen und dem Computer zugeführt werden. Es ist auch möglich, in befugter Weise Daten auf dem Grundkörper 2 abzuspeichern, jedoch nur auf diesem und nicht etwa auf einer Fremddiskette. Das Einschieben einer weiteren Diskette ist nur dann möglich, wenn vorher die Schutzvorrichtung 1 einschließlich des Grundkörpers 2 entnommen worden ist, so daß der Einschiebeschlitz 13 des Diskettenlaufwerks 12 für diese weitere Diskette zugänglich wird. Hierzu muß aber die Schutzvorrichtung aufgeschlossen und entfernt werden.

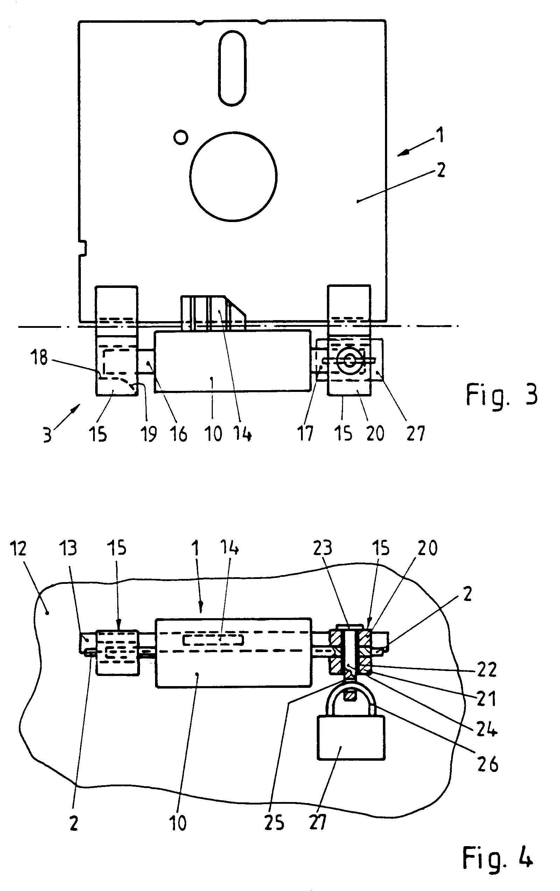

In den Figuren 3 und 4 ist eine andere Ausführungsform der Schutzvorrichtung 1 dargestellt. Auch hier ist der Grundkörper 2 als Diskette ausgebildet; er besitzt jedoch eine andere Größe und ist mit dem Schloßkörper 3 lösbar, d. h. durch eine Steckverbindung, verbunden. Der Schloßkörper 3 weist zwei Fortsätze 15 auf. Die Abdeckeinheit 10 besitzt hier beidseitig zwei bolzenartige Vorsprünge 16, 17, die mit den Fortsätzen 15 zusammenarbeiten. In dem einen Fortsatz 15 ist eine Bohrung 18 angebracht, die einseitig eine Ausfräsung 19 aufweist, so daß auf diese Art und Weise der Vorsprung 16 unter Anwendung einer Schwenkbewegung in die Bohrung 18 eingeführt und dabei die Abdeckeinheit 10 mit der Hindernisplatte 14 heranschwenkbar ist. Dies ist auch wieder nur dann möglich, wenn der als Diskette ausgebildete Grundkörper 2 bereits in den Einschiebeschlitz des Diskettenlaufwerks 12 eingeführt und abgesenkt worden ist. Beim Heranschwenken der Abdeckeinheit 10 wird gleichzeitig der Vorsprung 17 zwischen zwei Wangen 20 und 21 eingeschwenkt. Die Wangen 20 und 21 sowie der Vorsprung 17 besitzen eine vertikal fluchtende Durchbrechung 22, in die in der herausgeschwenkten Stellung ein mit einem Kopf 23 versehener Bolzen 24 eingesteckt werden kann. Der Bolzen 24 besitzt seinerseits an dem aus der Wange 21 herausragenden Ende eine Durchbrechung 15 für den Durchgriff des Bügels 26 eines üblichen Schlosses 27.

Es ist ersichtlich, wie auch bei dem Ausführungsbeispiel der Figuren 3 und 4 in der abgeschlossenen Stellung die Hindernisplatte 14 in den Einschiebeschlitz 13 des Diskettenlaufwerks 12 einragt und damit als Bestandteil der Abdeckeinheit 10 eine Entnahme der Schutzvorrichtung einschließlich des als Diskette ausgebildeten Grundkörpers 2 verhindert. Durch die Steckverbindung zwischen den Fortsätzen 15 des Schloßgehäuses 3 und des Grundkörpers 2 ist es möglich, die jeweilige Diskette auszutauschen. Dies kann natürlich erst nach dem Aufschließen des Schlosses 27 und dem Entfernen des Bolzens 24 und dem Abschwenken der Abdeckeinheit 10 mit nachfolgendem Herausnehmen des Grundkörpers 2 aus dem Diskettenlaufwerk 12 geschehen.

Auch andere Ausführungsformen sind denkbar. Das Schloßgehäuse 3 kann auch mit einem Riegelwerk oder sonstigen, über das Schloß betätigbaren Vorsprüngen versehen sein, die in das Diskettenlaufwerk 12 hineinreichen und dort vorgesehene ortsfeste Teile in der abgeschlossenen Stellung hintergreifen. Eine Ausbildung des Schloßgehäuses aus zwei Teilen, wobei der zweite Teile von der Abdeckeinheit 10 gebildet wird, etwa nach Art einer Schiebetür, einer Tür, einer Klappe o. dgl., ist möglich. Wichtig ist immer, daß die Schutzvorrichtung 1 nur in der aufgeschlossenen Stellung aus dem Diskettenlaufwerk 12 entnommen werden kann. Selbst bei lösbarer Verbindung mit dem Grundkörper 2 wird dieser durch die Schutzvorrichtung 1, insbesondere durch den Schloßkörper 3, in der eingesetzten Stellung im Diskettenlaufwerk 12 gesichert.

**Bezugszeichenliste:**

```
1   = Schutzvorrichtung
2   = Grundkörper
3   = Schloßkörper
4   = Wange
5   = Wange
6   = Bolzen
7   = Schwenkarm
8   = Doppelpfeil
9   = Durchbrechung
10  = Abdeckeinheit
11  = Auswurfriegel
12  = Diskettenlaufwerk
13  = Einschiebeschlitz
14  = Hindernisplatte
15  = Fortsatz
16  = Vorsprung
17  = Vorsprung
18  = Bohrung
19  = Ausfräsung
20  = Wange
21  = Wange
22  = Durchbrechung
23  = Kopf
24  = Bolzen
25  = Durchbrechung
26  = Bügel
27  = Schloß
```

**Patentansprüche**

1. Schutzvorrichtung für das Diskettenlaufwerk eines Computers, mit einem im wesentlichen in das Diskettenlaufwerk einführbaren Grundkörper, einem aus dem Diskettenlaufwerk herausschauenden Schloßkörper und einer Abdeckeinheit für zumindest einen Teil des Einschiebeschlitzes des Diskettenlaufwerks, dadurch gekennzeichnet, daß als Grundkörper (2) eine Diskette vorgesehen ist oder der Grundkörper (2) jedenfalls mit einer Diskette versehen ist, und daß die Abdeckeinheit (10) in der abgeschlossenen Stellung die Entnahme der Diskette dadurch verhindert, daß der im wesentlichen als Diskette ausgebildete Grundkörper (2) mit dem Schloßkörper (3) und der Abdeckeinheit (10) unlösbar verbunden ist und eine Hindernisplatte (14) aufweist, die zumindest einen Teil des Einschiebeschlitzes (13) des Diskettenlaufwerks (12) abdeckt.

2. Schutzvorrichtung nach Anspruch 1, dadurch gekennzeichnet, daß die Abdeckeinheit (10) an dem Schloßkörper (3) schwenkbar gelagert ist.

3. Schutzvorrichtung nach Anspruch 1 oder 2, dadurch gekennzeichnet, daß Grundkörper (2) und Hindernisplatte 814) so relativ zueinander angeordnet sind, daß die Hindernisplatte erst nach dem Absenken des Grundkörpers (2) in den Einschiebeschlitz (13) einführbar ist.

4. Schutzvorrichtung nach Anspruch 1 bis 3, dadurch gekennzeichnet, daß der Schloßkörper (3) einen Aufnahmeraum für den Einsatz eines Schlosses, insbesondere Steckschlosses, aufweist.

5. Schutzvorrichtung nach Anspruch 1 bis 4, dadurch gekennzeichnet, daß die Abdeckeinheit (10) einen Teil zum Abdecken der Zugänglichkeit des Auswurfriegels (11) des Diskettenlaufwerks (12) aufweist.

6. Schutzvorrichtung nach einem der Ansprüche 1 bis 5, dadurch gekennzeichnet, daß die Abdeckeinheit (10) und/oder der Schloßkörper (3) den Einschiebeschlitz (13) oder sonstige Teile des Diskettenlaufwerks (12) hintergreifende Vorsprünge, die über das Schloß betätigbar sind, aufweist.

7. Schutzvorrichtung nach Anspruch 1, dadurch gekennzeichnet, daß der im wesentlichen als Diskette ausgebildete Grundkörper (2) mit dem Schloßkörper (3) und der Abdeckeinheit (10) lösbar verbunden ist oder ein davon getrenntes Teil darstellt.

8. Schutzvorrichtung nach Anspruch 7, dadurch gekennzeichnet, daß die Diskette über eine Steckhalterung auswechselbar am Schloßkörper (3) angeordnet ist.

9. Schutzvorrichtung nach Anspruch 1 oder 7, dadurch gekennzeichnet, daß der Schloßkörper (3) als ein Rahmen mit einem zugeordneten Schieber, einer Tür oder einer Klappe ausgebildet ist.

10. Schutzvorrichtung nach Anspruch 9, dadurch gekennzeichnet, daß die beiden Teile des Schloßkörpers (3) in der abgeschlossenen Stellung aneinander fixiert und am Diskettenlaufwerk (12) gesichert sind.

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 794 587 (J. D. CORDIANO)<br><br>* column 2, line 44 - line 50 *<br>* column 4, line 3 - line 19; claims 1-8; figures 1-4 *<br><br>--- | 1,2,4,5, 7,8 | G11B33/00<br>G11B23/28 |
| A,D | DE-U-9 000 554 (SCHOOR BODO)<br>* claim 1; figures 1-4 *<br><br>----- | 1 | |

TECHNICAL FIELDS SEARCHED (Int. Cl.5)

G11B
G06F

The present search report has been drawn up for all claims

| Place of search | Date of completion of the search | Examiner |
|---|---|---|
| BERLIN | 30 JULY 1992 | BERNAS Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)